## Europäisches Patentamt

## European Patent Office

## Office européen des brevets

(19)

(11) Publication number: **0 120 232**
**B1**

(12)

# EUROPEAN PATENT SPECIFICATION

(45) Date of publication of patent specification: 24.08.88

(51) Int. Cl.⁴: **G 21 C 19/06, G 21 C 19/40**

(21) Application number: **84101135.6**

(22) Date of filing: **04.02.84**

(54) Storage of spent nuclear fuel.

(30) Priority: **01.03.83 US 470905**

(43) Date of publication of application:
**03.10.84 Bulletin 84/40**

(45) Publication of the grant of the patent:
**24.08.88 Bulletin 88/34**

(84) Designated Contracting States:
**DE FR GB IT SE**

(56) References cited:
**EP-A-0 023 742**
**EP-A-0 028 054**
**EP-A-0 071 364**
**EP-A-0 082 317**
**DE-A-2 638 922**
**DE-A-2 652 596**
**FR-A-2 426 966**
**US-A-4 088 897**
**US-A-4 342 620**

(73) Proprietor: **WESTINGHOUSE ELECTRIC CORPORATION**
**Westinghouse Building Gateway Center**
**Pittsburgh Pennsylvania 15222 (US)**

(72) Inventor: **Machado, Octavio Jorge**
**4435 Roxborough Place**
**Pensacola Florida 32504 (US)**
Inventor: **Moore, Jay Thomas**
**Route 4, Box 51-A**
**Milton Florida 32570 (US)**
Inventor: **Cooney, Barry Francis**
**365 Cypress Hill Drive**
**Pittsburgh Pennsylvania 15235 (US)**

(74) Representative: **Patentanwälte Dipl.-Ing. R. Holzer Dipl.-Ing. (FH) W. Gallo**
**Philippine-Welser-Strasse 14**
**D-8900 Augsburg (DE)**

**0 120 232**

## Description

This invention relates to racks for showing nuclear fuel assemblies according to the preamble of claim 1. Such racks are generally known (see for example, EP—A—23742 and US—A—4088897.

Nuclear plants generate large quantities of spent fuel. In the past, it was contemplated that the spent fuel would be reprocessed to provide fissionable uranium and plutonium as a renewal fuel. But the Nuclear Non-Proliferation Treaty, to which the United States is a party, has been interpreted to bar the reprocessing of fuel inasmuch as plutonium, a product of the reprocessing, may be utilized as a weapons material. It then becomes necessary to cope with the problem of safely handling the spent fuel which is continuously generated in nuclear plants. The spent fuel must be stored for a number of years before it can safely be disposed of as nuclear waste. The solution of the spent-fuel problem deals with the storage of the spent fuel during these years.

Spent fuel retains a measure of reactivity, i.e., neutron emissivity, which is appreciable but is insufficient for economic use in a reactor. It is then necessary that the spent fuel be stored in such a way that the mass stored does not become critical. In refueling a reactor, the fuel assemblies in specified areas of the reactor are replaced at intervals of several years. The residual reactivity of the removed fuel assemblies throughout each area of the refueling is not uniform. It is then necessary, in the storage of spent fuel, to preclude nuclear criticality by reason of the presence of fuel assemblies having high residual reactivity. In accordance with the teachings of the prior art, such criticality is precluded by providing racks whose cells are appropriately spaced. In addition, quantities of neutron-absorbing material or poison can be provided in the cells of the racks in which the spent fuel is stored. The first of these expedients requires that the volume occupied by racks be quite large. Both expedients generate high costs. It is an object of this invention to provide for the storing of spent fuel in a way that shall be economic both financially and with respect to volume.

This invention relates to storage of spent fuel in a rack of uniformly spaced cells. The cells dimensions and the actual center-to-center (CTC) spacing is set to accommodate the types of fuel which are to be stored in the rack. Each fuel-storage pool is subdivided int two regions, herein designated Region 1 and Region 2. Region 1 is the smaller region and is reserved for off-core loading; i.e., for temporary loading of spent-fuel assemblies, regardless of burn-up, as they are removed from the reactor. Typically, Region 1 may serve to load about 200 fuel assemblies at a low fuel-assembly density using a fraction, usually half, of the available storage locations. Region 2 is reserved for storing, for the required long time interval, the assemblies from Region 1 which have been found to have sustained at least a minimum predetermined burn-up. As used in this application, the expression "storage location" means generally a location where fuel assemblies are stored. Specifically, this term comprehends cells or locations which may be formed between a plurality of cells.

In Region 1 the storage locations are in a checkerboard pattern in a honeycomb-type structure. One set of storage locations in this honeycomb are capped to prevent the insertion of fuel assemblies, while the other set is uncapped. In a typical checkerboard pattern, a square of one color, for example, black, alternates with a square of another color, for example, red, so that the total area of black squares is equal to the total area of red squares. Typically, the checkerboard pattern or honeycomb structure of Region 1 in the practice of this invention may take this form. However, a structure in which a number of contiguous cells are capped in uniformly spaced areas of the cell surface may also be provided. This structure is necessary to reduce the possibiliy of criticality. The reference in this application to a "generally checkerboard" pattern is intended to cover this structure as well as one simulating an actual checkerboard. It is necessary that the reactivity $K_{eff}$ of the spent fuel assemblies in Region 1 be maintained at less than or equal to 0.95. For this purpose, the cells may be provided with neutron-absorbing material. The water in which the rack is immersed may be maintained adequately neutron absorbent by the solution therein of a boron compound or the compound of another neutron-absorbing element.

The spent-fuel assemblies in Region 1 are surveyed through administrative control to determine burn-up. Those assemblies that have sustained the required burn-up are transferred to Region 2 where they remain until their radioactivity is reduced to a magnitude permitting removal from the pool and other disposal.

It is desirable that, in the use of a spent-fuel storage pool, the option be afforded to include neutron-absorbing poison in the rack either before the rack is installed or after it is installed.

Such poison material when attached to the cells in the form of plates make the cells relatively heavy so that the whole structure becomes more sensitive in case of earthquakes.

In some storage structures for spent fuel the cells have corner flanges or corner projections by which adjacent cells are interconnected thereby providing for a very rigid construction (EP—A—23 742), the corner joints of adjacent cells extending over the full length of the cells. Such rigid connection, however, may cause fractures for certain type of vibrational loadings as they occur in certain geographical regions.

It is the principal object of the present invention to provide a spent-fuel storage facility in which even with nuclear poison material disposed on the side walls of the rack appropriate cell-to-cell spacing is reliably maintained, that is rack response to loadings during earthquakes is dampened and minimized even without spacing grids.

With this object in view, the present invention resides in a rack for storing nuclear fuel assemblies, said

2

rack including a base plate, an array of spent-fuel storage locations, each location including a hollow body formed of a readily deformable metallic sheet, said body having a volume therein dimensioned to receive a fuel assembly, said bodies being mounted on said plate with each body secured to bodies adjacent each body along a welded joint formed by a plurality of welds extending longitudinally of the secured bodies along said joint, with at least some of said spent-fuel storage locations including a plurality of pockets for the reception of neutron-absorbing material around their peripheries, said pockets being common to adjacent storage locations, characterized in that each pocket is formed between the outer surface of the sheet which bounds the volume of the corresponding body and a wrapper plate secured to said outer surface, and that said welds are formed by sections of filler wire which are disposed longitudinally between the edges of adjacent cells in axially spaced locations, the spacing of the welds providing for open passages between the weld locations and being such that the response of the rack when it is subjected to the anticipated seismic acceleration of the rack, characteristic of the geographical region where the rack is installed, is minimized.

Each pocket is formed between the surface and a wrapper plate secured to the surface. Where the bodies are of polygonal section, a pocket is formed between each side of a body and the wrapper plate. An additional spent-fuel storage location is also formed between each body or cell and the sequential bodies or cells contiguous to it. This storage location has in common with the bodies between which is formed the wall sections and pockets of the latter bodies. It is to be borne in mind that there is symmetry about each body within the rack and that the above selection of a body and the bodies secured to it is applicable to any set of bodies within the rack. Any body within the rack is at the same time a body to which adjacent bodies are secured, one of the secured bodies, or the additional bodies having walls common to the body having adjacent bodies secured to it and the sequential adjacent bodies.

The pockets have additional advantages. They maintain the required CTC spacing between the assemblies which are placed in the spent-fuel storage locations without the necessity for grids. In addition they maintain fuel-assembly-to-fuel-assembly separation which permits closer spacing of the fuel assemblies where this spacing is limited by the necessity of avoiding criticality. The assemblies are placed in the cells so as to have limited movement; typically the spacing of an assembly from the walls of a cell is 6.3 mm.

The invention will become more readily apparent from the following description of a preferred embodiment thereof shown, by way of example only, in the accompanying drawings, in which:

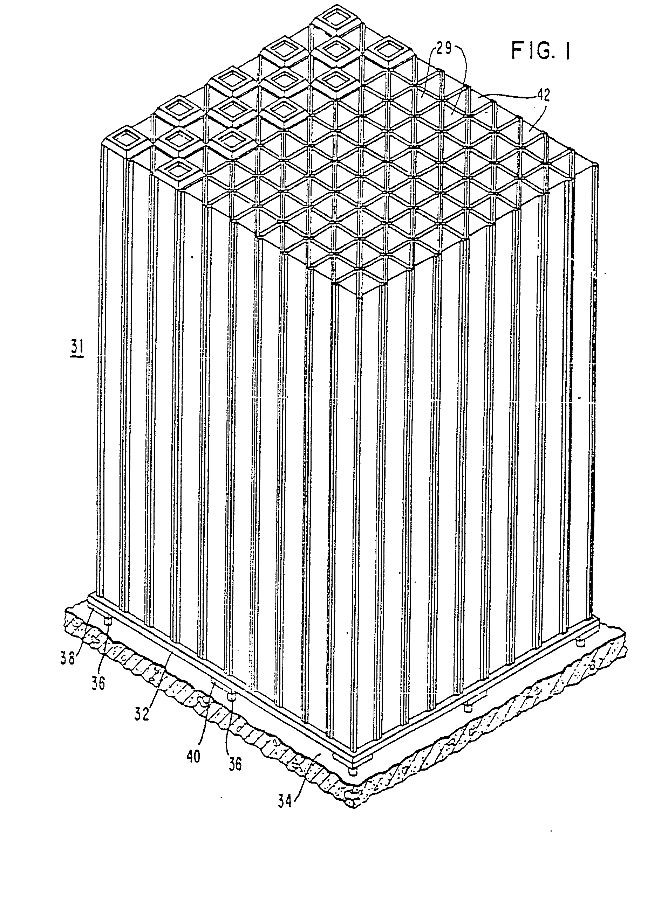

Figure 1 is a view in isometric showing a rack for storing spent nuclear fuel in accordance with this invention;

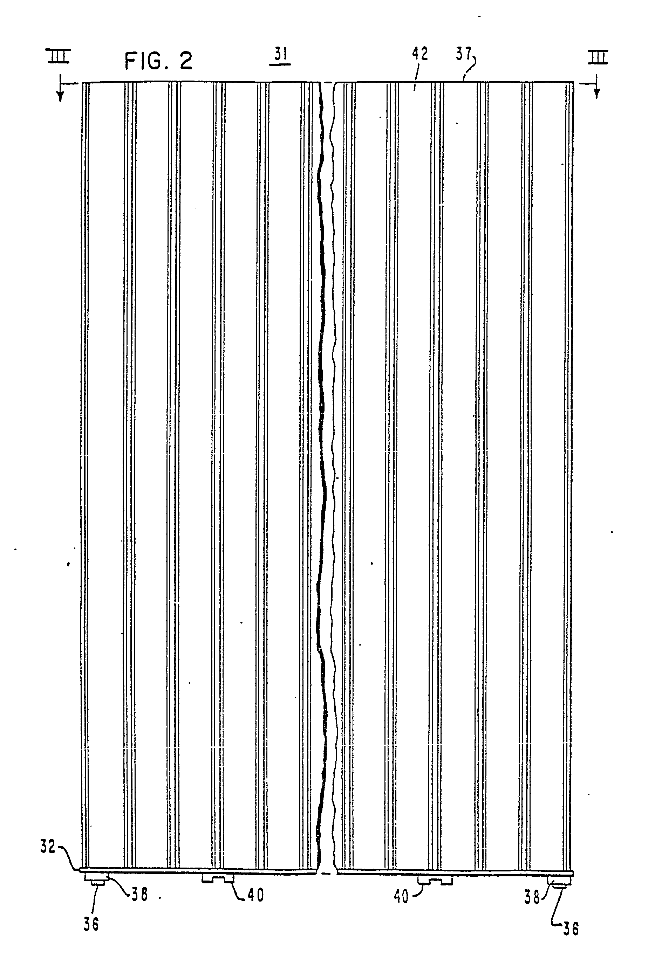

Fig. 2 is a view in side elevation of the rack shown in Fig. 1;

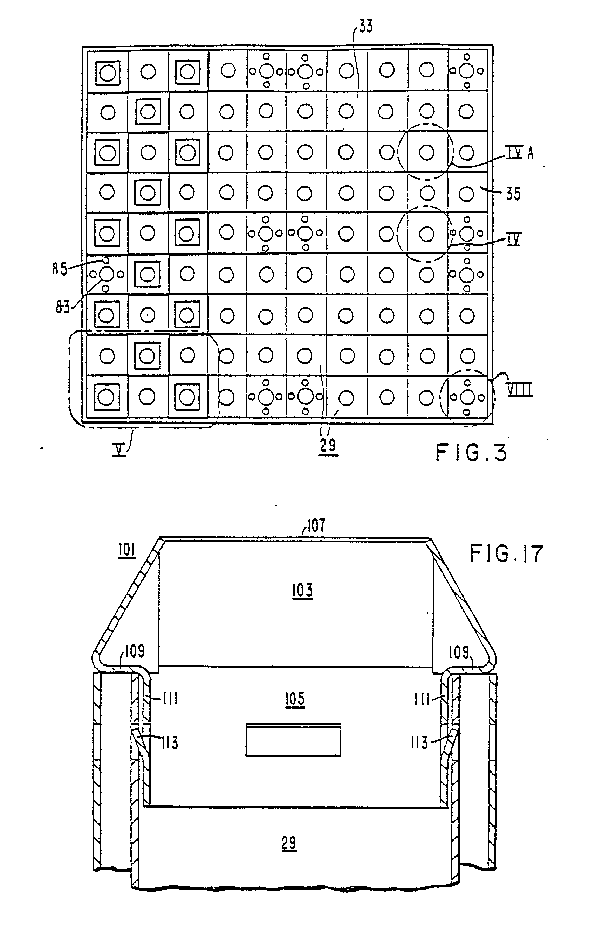

Fig. 3 is a plan view taken in the direction III—III of Fig. 2 simplified to show only the relative positions of the cells;

Fig. 4 is an enlarged fragmental view of the portion of Fig. 3 in circle IV showing the plan view of a cell at the position of the circle IV;

Fig. 4A is an enlarged fragmental plan view of the portion of Fig. 3 in the circle IVA of Fig. 3;

Fig. 5 is an enlarged fragmental plan view of the portion of Fig. 3 in block V of Fig. 3;

Fig. 6 is an enlarged fragmental plan view of the portion of Fig. 5 in circle VI of Fig. 5;

Fig. 7 is a view in section taken along direction VII—VII of Fig. 6 showing the positions of the welds joining corner of the cell bodies of the rack shown in Fig. 1;

Fig. 8 is an enlarged fragmental plan view of the portion of Fig. 3 in circle VIII;

Fig. 9 is a view in side elevation enlarged taken in direction IX—IX of Fig. 5;

Fig. 10 is a view in side elevation enlarged taken in direction X—X of Fig. 8;

Fig. 11 is a graph showing the relationship between seismic vibrations and acceleration of a rack; this relationship is used in determining the spacing of the welds between the cell bodies of the rack shown in Fig. 1;

Fig. 12 is a plan view of the sheet from which a half-section of a cell body is formed;

Fig. 13 is a view in end elevation of the sheet shown in Fig. 12;

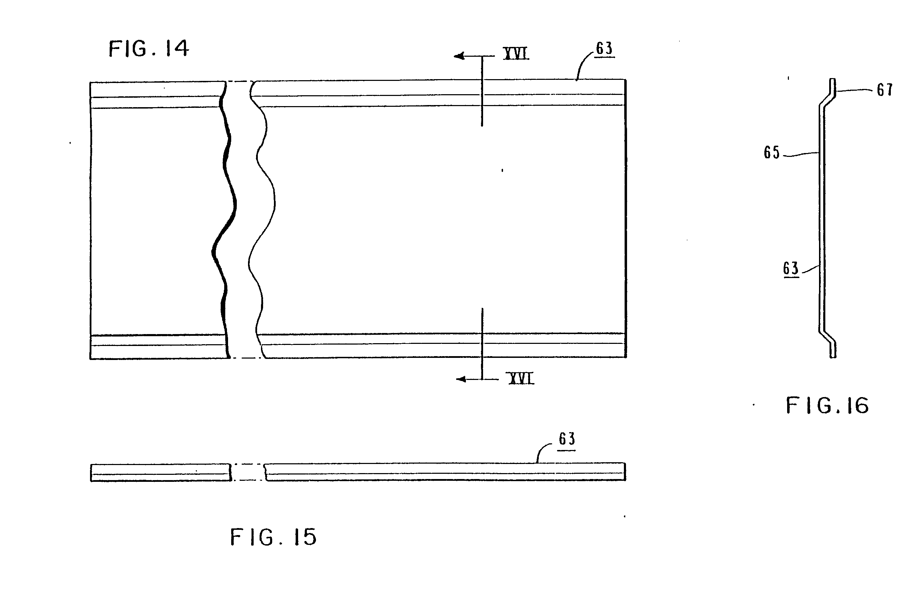

Fig. 14 is a plan view of the wrapper which forms the pocket with the sheet;

Fig. 15 is a view in end elevation of the wrapper shown in Fig. 14;

Fig. 16 is a view in section taken along direction XVI—XVI of Fig. 14; and

Fig. 17 is a view in longitudinal section showing the cap structure of the rack according to this invention.

A rack 31 for storing spent fuel consists of an array of storage locations 29, 33, 35 and 75 secured to a base 32. The rack 31 is supported on the floor 34 of a deep pool of water on studs 36 extending from pads 38. The pads 38 are of the type disclosed in EP—A—0071364 (U.S. Application Serial No. 282,991, filed July 14, 1981, assigned to Westinghouse Electric Corporation (herein: Machado)). The pads 38 are secured to the underside of the base 32 and are provided with facilities for levelling the rack as disclosed in Machado. Lugs 40 are provided intermediate the pads 38. The lugs 40 are engageable by lifting rods (not shown) extending from a crane (not shown) for raising and lowering the rack 31.

The cells 29 and 35 are arranged so that the storage locations 33 are formed between the bounding walls of the cells 29 and 35. The general term "storage locations" is applied to the fuel-assembly receiving members 33 to distinguish them from the fuel-assembly receiving members or storage locations 29, 35 and 75 that are fabricated cells. The storage locations 29, 33, 35 and 75 have substantially equal open transverse cross-sectional area and are so dimensioned as to accommodate the spent-fuel assemblies of the plant where the rack is installed.

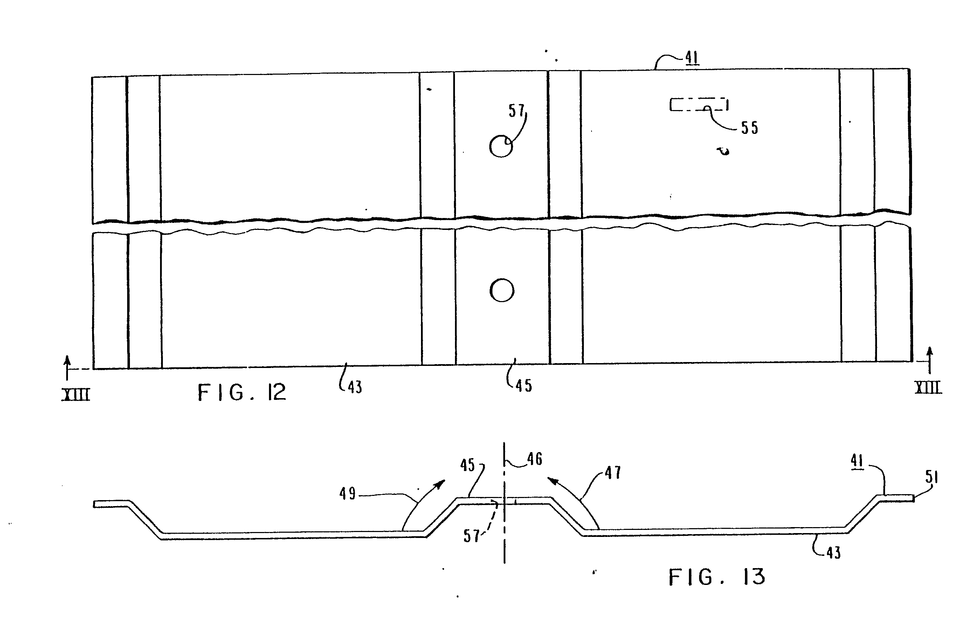

Each cell 29 is an elongated body 42 which may be of polygonal or circular or other transverse cross-sectional shape. Typically, the body 42 is in the form generally of an elongated rectangular parallelopiped with open ends 37 and 39 at the top and bottom. The body is formed of long sheets 41 (Figs. 12, 13), typically of type 304 stainless steel, pressed into a structure consisting of two sections 43 channel-shaped downwardly as seen in Fig. 13 joined by a center section 45 channel-shaped upwardly. The so-formed sheet is bent at right angles about the longitudinal center line 46 of the center section in the direction of the arrows 47 and 49 to form two sides or walls 48 of a half section 50 of the body. A pair of these halves are abutted along these edges 51 and welded along the abutted edges to form the body 42. The sides 48 of the body are reentrant along the channel sections 43. The welded joints along the edges 51 and the joints 53 at the right angle bends of the halves project outwardly forming the apices of the transverse cross section of the body. The sheets 41 which form the halves of the bodies each has a slot 55 near the top 37.

In a typical case the sheet 41; i.e., the body 42, may have a length or height of about 4 m. The width of the sheet 41 may be 54 cm and the thickness 1.57 mm. Another typical set of dimensions are: length 4.5 m, width 49 cm and thickness 1.9 m.

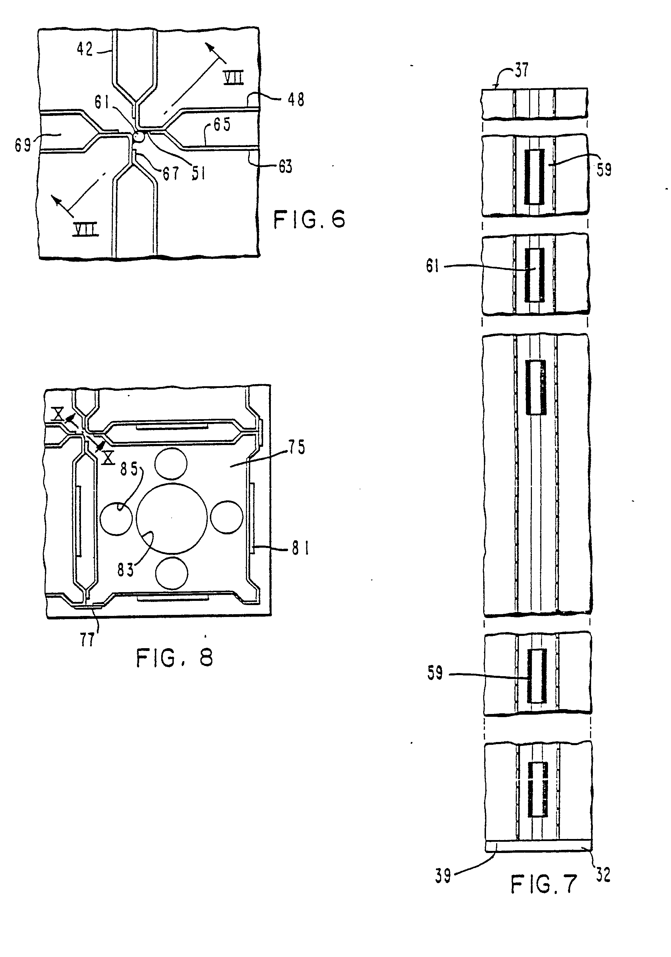

The cells 29 may be regarded as being joined in a group consisting of a central cell 29 from each of whose edges 51 and 53 a cell 29 extends radially. Each edge 51 or 53 of a central cell is contiguous to an edge 51 and 53 of a radially extending cell 29. The contiguous edges are joined by a series of welds 59 along their lengths formed by fusing a filler wire 61 (Fig. 7). The welds 59 are so spaced that the response of the rack to the anticipated seismic acceleration of the rack in the geographical region where the rack is installed is minimized.

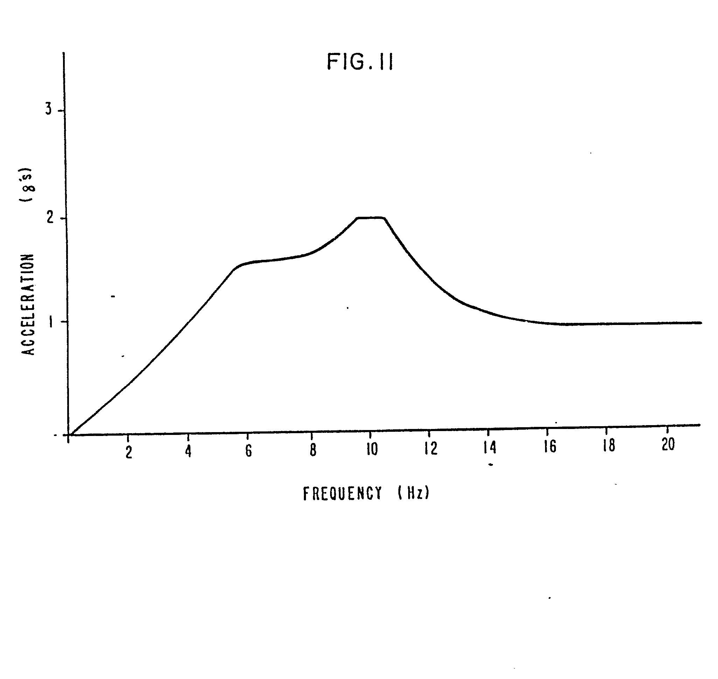

This feature can be understood from the graph shown in Fig. 11. The seismic vibration frequency of the rack, characteristic of the region of the plant, is plotted horizontally in Hertz and the acceleration in g, gravity constant, is plotted vertically. It is seen that the curve has a maximum at about 10 Hz. The welds 29 should be so spaced that the frequency is low. At low frequencies the acceleration is low. Seismic damage to the rack is precluded. The welds can also be spaced so that the seismic vibration frequency is high; i.e., the rack is stiff, where such a condition reduces acceleration.

A wrapper plate 63 is welded externally to each side of the body 42. The wrapper plate 63 is a thin sheet of type 304 stainless steel pressed so that it has the form of an elongated channel 65. The wrapper plate may have different dimensions for different purposes. Typical dimensions are shown in the following Table I.

TABLE I

| Length or Height Perpendicular to Base 32 in m | Width in cm | Thickness in mm |
|---|---|---|
| 4.1 | 25.0 | 1.57 |
| 4.75 | 23.0 | 1.90 |
| 4.12 | 29.2 | 1.57 |
| 4.92 | 27.0 | 1.90 |

The wrapper plate 63 is welded at its extending edges 67 to each outer wall 48 of the body 42 with the cavity formed by the channel 65 facing the reentrant cavity of the wall so that each wall 48 and each wrapper plate form a pocket 69. The pocket 69 may serve for the deposit of neutron-absorbing material should the need arise. The pockets 69 provide the option for readily including neutron poison in the rack 31 either before or after the rack is installed in the pool.

The storage locations 33 are formed between each set of four cells 29. The four cells include a central cell 29, two radial cells 29 welded to the central cell and a radial or central cell 29 of an adjacent group of welded cells 29. The walls of the storage locations 33 are the wrapper plates 63 welded to a wall 48 each of the adjacent cells 29. The storage location 33 has pockets 69 in common with each of the adjacent four cells 29.

There are four pockets 69 in each storage location 29, 33 and 35. The pockets are interposed in each storage location on each side between a stored spent-fuel assembly (not shown) and the fuel assemblies in adjacent storage locations which have walls in common with the storage location. The pockets 69 maintain the required CTC spacing between assemblies without the need of spacers such as grids, between storage locations. The pockets 69 also maintain the fuel-assembly-to-fuel-assembly separation. This permits closer spacing of assemblies limited by criticality concerns.

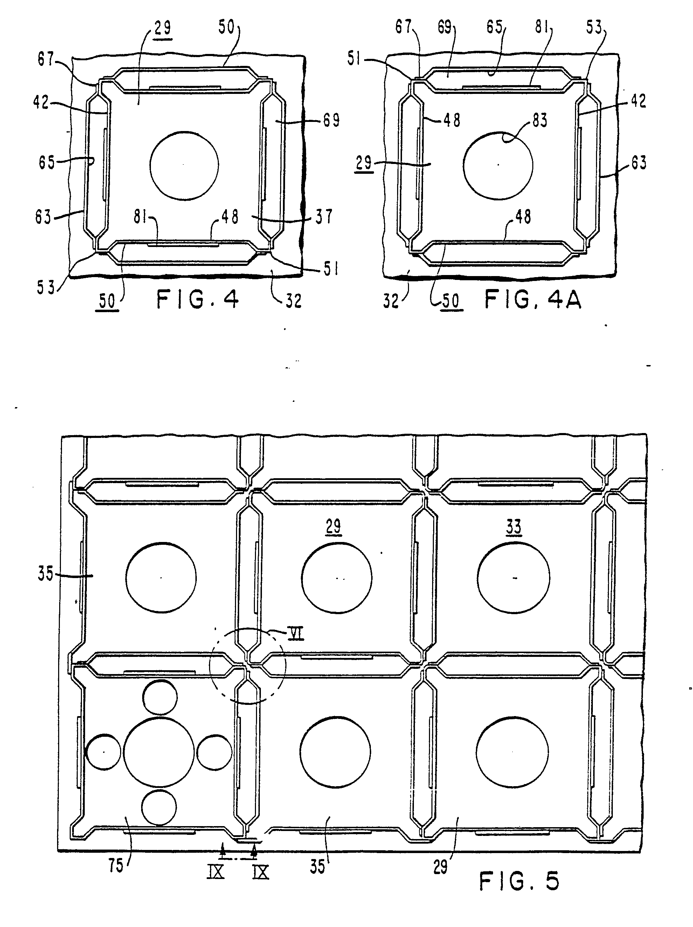

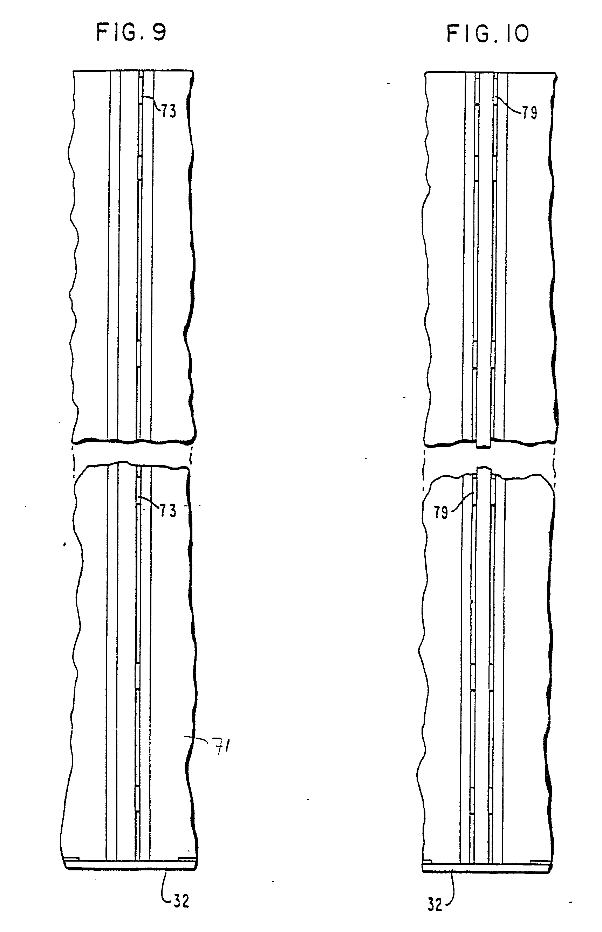

The cells 35 are along the periphery of the rack. Each cell 35 is formed between three adjacent cells 29 (Fig. 5). The remaining side of each cell 35 is formed by a cover plate 71. The cover plate 71 is joined to the ends (corners) of the contiguous cells by welds 73 along the longitudinal joints between the cover plate 71 and the edges 53 (Fig. 9). The welds 73 may be spaced in the same way as the welds 59. The cells 75 in the corners (Fig. 8) of the rack are closed by half sections 77 similar to the half sections 50 which are combined to form the cells 29. The ends of the half sections are welded to the ends of the joints 51 of the adjacent cells by spaced welds 79 (Fig. 10).

The storage locations 29, 33, 35 and 75 are secured to the base 32 by fillet welds 81 joining the lower ends of the walls 48 to the base. To the extent practicable, the four walls 48 of each cell are welded to the base as shown in Figs. 4 and 5. In cases in which one of the walls is not accessible, only three of the walls are welded to the base 32 as shown in Figs. 4A and 5. Water is circulated through holes 83 and 85 in the base 32, upwardly along the cells, and through the pockets 69.

The fuel storage pool 31 is subdivided into Region 1, a smaller region, and Region 2, a larger region. Region 1 accommodates temporarily off-core spent-fuel assemblies. Region 2 accommodates assemblies with a specified minimum burn-up. The assemblies in Region 1 must be spaced substantial distances to avoid a critical condition. For this purpose, certain cells in Region 1 are provided with caps 101 (Fig. 17) to prevent inadvertent deposit of assemblies at too close a spacing. The caps 101 close the top openings of cells in Region 1 in a checkerboard or honeycomb pattern. However, instead of uncapped cells being encircled by single capped cells, an uncapped cell may be encircled by groups of several capped cells.

Each cap 101 has a head 103 and a stem 105. The head 103 is of generally rectangular transverse cross section and longitudinally tapers from an opening 107 at the top to a flat frame-like surface 109. The stem 105 is of generally rectangular transverse cross section. From opposite faces 111 of the stem, fingers 113 extend inwardly at an angle. The cap 101 is placed on a cell 29, 33, 35 or 75 with the stem penetrating into the cell and the flat surface 109 spanning the pockets 69 and in engagement with the upper rims of the walls forming the cell and the upper rims of the wrapper plate 65. The cap 101 is composed of stainless steel or other suitable metal so that the fingers 113 are resilient. When the cap 101 is thrust into the opening in a cell, the tips of the fingers 113 are sprung and penetrate into the slots 55 and lock the cap 101 in the cell. The cap can only be removed by a special tool which penetrates into the pocket 69 and retracts the fingers 113.

## Claims

1. A rack for storing nuclear fuel assemblies, said rack including a base plate (32), an array of spent-fuel storage locations )29, 33), eachlocation including a hollow body (42) formed of a readilydeformable metallic sheet, said body.(42) having a volume therein dimensioned to receive a fuel assembly, said bodies (42) being munted on said plate (32) with each body secured to bodies (42) adjacent each body (42) along a welded joint formed by a plurality of welds extending longitudinally of the secured bodies (42) along said joint, with at least some of the spent-fuel storage locations (33) including a plurality of pockets (69) for the receptions of neutron-absorbing material around their peripheries, said pockets (69) being common to adjacent storage locations, characterized in that each pocket (69) is formed between the outer surface of the sheet (48) which bounds the volume of the corresponding body (42) and a wrapper plate (63) secured to said outer surface, and that said welds areformed by sections of filler wire (61) which are disposed longitudinally between the weld locations and being such that the response of the rack when it is subjected to the anticipated seismic accelaration of the rack, characteristic of the geographical region where the rack is instal,ed, is minimized.

2. A rack as claimed in claim, characterized in that the body (42) of each spent-fuel storage location (29) into which the metallic sheet (48) is formed of is of generally polygonal transverse cross section with the polygonal sides shaped so that the apices (51, 53) of the resulting polygonal surface project outwardly, the bodies (42) being so mounted on the base (32) that, except for spent-fuel storage locations along the outer periphery of the rack, each apex (51, 53) of each body (42) is contiguous to and joined to the apex (51, 53) of an adjoining body (42), each location (29) being thus encircled by a number of locations equal to the number of the apices (51, 53) of each location, additional locations (33) being formed between each encircled location and each sequential pair of encircling locations (29), a side of said encircled location and a side each of said sequential locations (29) forming three of the sides of a said additional location.

## Patentansprüche

1. Gestell zur Lagerung von Kernbrennelementen, mit einer Grundplatte (32), und einer Anordnung von Speicherplätzen (29, 33) für verbrauchten Brennstoff, von denen jeder Platz einen aus leicht verformbarem Metallblech bestehenden Hohlkörper (42) aufweist, dessen Volumen für die Aufnahme eines Brennelements bemessen ist, wobei die Hohlkörper (42) auf der Grundplatte (32) montiert und jeder Hohlkörper (42) an benachbarten Hohlkörpern (42) mittels eine Schweißverbindung befestigt, ist, die durch eine Vielzahl von längs der befestigten Hohlkörper (42) mittels einer Schweißverbindung befestigt ist, die durch eine Vielzahl von längs der befestigten Hohlkörper (42) ver laufenden Schweißstellen entlang der Schweißverbindung gebildet ist, wobei mindestens einige der Speicherplätze (33) für verbrauchten Brennstoff eine Mehrzahl von Tachen (69) zur Aufnahme von neutronenabsorbierendem Material entlang ihres Umfangs aufweisen und diese Taschen (69) benachbarten Speicherplätzen gemeinsam zugeordnet sind, dadurch gekennzeichnet, daß jede Tasche (69) zwischen der Außenfläche des das Volumen des betreffenden Hohlkörpers (42) begrenzenden Bleches (48) und einer an dieser Außenfläche befestigten Hüllplatee (63) gebildet ist, und daß die genannten Schweißstellen durch Fülldrahtabschnitte (61) gebildet sind, die in Längsrichtung zwischen den Ecken benachbarter Zellen an axial auseinanderliegenden Stellen angeordnet sind, wobei der Abstand der Schweißstellen (59) für offene Durchtrittsöffnungen zwischen den Schweißstellen sorgt und so gewählt ist, daß das Ansprechen des Gestells auf zu erwartende, für den geographischen Einbauort des Gestells charackteristische seismische Beschleunigungen minimal ist.

2. Gestell nach Anspruch 1, dadurch gekennzeichnet, daß der Hohlkörper (42) jedes Speicherplatzes (29) für verbrauchten Brennstoff, zu welchem das Metallblech (48) geformt ist, einen etwa polygonalen Querschnitt mit so geformten Polygonseiten hat, daß die Scheitel (51, 53) der sich ergebenden Polygonoberfläche auswärts vorspringen, und daß die Hohlkörper (42) derart an der Grundplatte (42) montiert sind, daß, ausgenommen die Speicherplätze für verbrauchten Brennstoff am Außenumfang des Gestells jeder Scheitel (51, 53) jedes Hohlkörpers (42) angrenzend zum Scheitel (51, 53) eines sich anschließenden Hohlkörpers (42) verläuft und mit diesem verbunden ist, so daß jeder Speicherplatz (29) von einer der Anzahl der Scheitel (51, 53) jedes Speicherplatzes entsprechenden Anzahl von Speicherplätzen umschlossen ist und zusätzliche Speicherplätze (33) zwischem dem umschlossenen Speicherplatz und jeweils zwei aufeinanderfolgenden umschließenden Speicherplätzen (29) gebildet ist, wobei eine Seite des umschlossenen Speicherplatzes und jeweils eine Seite der aufeinanderfolgenden umschließenden Speicherplätze (29) zusammen drei der Seiten des zusätzlichen Speicherplatzes bilden.

**Revendications**

1. Râtelier pour stocker des assemblages de combustible nucléaire, ledit râtelier comprenant une plaque (32) de base, un réseau d'emplacements (29, 33) de stockage de combustible usé, chaque emplacement comportant un corps creux (42) formé d'une feuille métallique facilement déformable, ledit corps (42) ayant un volume intérieur dimensionné pour recevoir un assemblage de combustible, lesdits corps (42) étant montés sur ladite plaque (32), chaque corps étant fixé aux corps (42) adjacents à chaque corps (42) le long d'un joint soudé formé par une pluralité de soudures s'étendant sur la longeur des corps fixés (42) le long dudit joint, avec au moins quelques uns desdits emplacements (33) de stockage de combustible usé comportant une pluralité de poches (69) pour la réception de matériaux absorbeurs de neutrons autour de leur périphérie, lesdites poches (69) étant communes aux emplacements adjacents de stockage, caractérisé par le fait que chaque poche (69) est formée entre la surface extérieure de la feuille (48) qui entoure le volume du corps correspondant (42), et une plaque (63) de recouvrement fixée à ladite surface extérieure, et que lesdites soudures sont formées à l'aide de sections de fil (61) de remplissage qui sont disposées longitudinalement entre les bords des cellules adjacentes dans des emplacements axialement espacés, l'espacement des soudures (59) laissant des passages libres entre les emplacements de soudure, et étant tel que la réponse de râtelier, quand il est soumis à l'accélération sismique anticipée du râtelier, caractéristique de la région géographique où la râtelier est installé est minimisée.

2. Râtelier selon la revendication 1, caractérisé par la fait que le corps (42) de chaque emplacement (29) de stockage de combustible usé, dans lequel est formée la feuille métallique (48), est de section transversale généralement polygonale, les côtés polygonaux étant formés de telle sorte que les sommets (51, 53) de la surface polygonale résultante font saillie vers l'extérieur, les corps (42) étant montés sur la base (32) de telle sorte que, excepté pour les emplacements de stockage pour le combustible usé le long de la périphérie extérieure du râtelier, chaque sommet (51, 53) de chaque corps (42) est contigu et reliée au sommet (51, 53) d'un corps adjacent (42), chaque emplacement (29) étant ainsi encerclé par un nombre d'emplacements égal au nombre de sommets (51, 53) de chaque emplacement, des emplacements additionnels (33) étant formés entre chaque emplacement encerclé et chaque paire séquentielle d'emplacements encerclants (29), un côté dudit emplacement encerclé et un côté de chacun desdits emplacements séquentiels (29) formant trois des côtés de l'un desdits emplacements additionnels.

FIG. I

29

42

31

38
36
32
40
36
34

FIG. 2

0 120 232

FIG.3

FIG.17

3

FIG. 4

FIG. 4A

FIG. 5

FIG. 6

FIG. 8

FIG. 7

## FIG. 9

73

73

71

32

## FIG. 10

79

79

32

FIG. II

_41_

57

55

XIII

FIG. 12

43

45

XIII

0 120 232

49 45 46 47 _41_ 51

57

43

FIG. 13

FIG.14

FIG.15

FIG.16

63

67

65

63

63

XVI

XVI

9.

0 120 232